# EUROPEAN PATENT SPECIFICATION

(11) **EP 3 908 798 B1**
(45) Date of publication and mention of the grant of the patent: **25.09.2024**
(21) Application number: 20700032.4
(22) Date of filing: 10.01.2020
(51) Int. Cl.: F28D 20/02, F28D 20/00, H05B 3/00, F01K 25/02, F01K 25/00, F01K 3/20, F01K 3/00, F01K 17/06

(54) **HEAT STORAGE SYSTEM AND HEAT TRANSFER SYSTEM COMPRISING A STORAGE CONTAINER FOR A HEAT STORAGE MASS**
WÄRMESPEICHERSYSTEM UND WÄRMETRANSPORTSYSTEM MIT EINEM SPEICHERBEHÄLTER FÜR WÄRMESPEICHERMASSE
SYSTÈME DE STOCKAGE DE CHALEUR ET SYSTÈME DE TRANSFERT DE CHALEUR COMPRENANT UN RÉCIPIENT DE STOCKAGE POUR MASSE DE STOCKAGE DE CHALEUR

(30) Priority: 11.01.2019 EP 19151339
(43) Date of publication of application: 17.11.2021
(73) Proprietor: DryNovations B.V., 5469 RA Erp (NL)
(72) Inventor: DOPPELBAUER, Günter, 47445 Moers (DE); VERBRUGGEN, Marijn, 5427 DG BOEKEL (NL); HEEREN, Arjan, 5427 DG BOEKEL (NL)
(74) Representative: Verhees, Godefridus Josephus Maria
(86) International application number: PCT/EP2020/050489
(87) International publication number: WO 2020/144306

(56) References cited:
- WO-A1-2013/138915
- DE-A1- 102012 000 143
- DE-A1- 102016 202 285
- DE-A1- 2 725 658
- DE-A1- 2 741 829
- US-A- 5 571 232

## Description

### Technical field

The present disclosure relates to a heat transfer system comprising a heat storage salt. More in particular, the present disclosure relates to a heat storage mass that is convertible from a solid to a liquid phase by adding heat and from a liquid to a solid state by releasing heat. During conversion from a solid to a liquid phase, the heat storage mass stores latent heat, that can be released again when converting from the liquid to the solid phase. This heat storage mass can be applied in a heat transfer system in which heat, for example originating from a solar plant or combustion device, is stored in the heat storage mass during the liquefaction process, which liquid heat storage mass then can be transported towards a heat consuming system or device, for example a system for heating a building, for drying wet biomass or for producing steam for generating electricity, in which the heat from the liquid heat storage mass is released and used. During use, the liquid heat storage mass cools down and solidifies. The heat storage mass can for instance be a salt or a metal that can be molten and can solidify again.

### Background

In DE 27 25 658 A, a heat storage device is described having a storage vessel, a fluid flow circuit external to and in fluid communication with the vessel, a heat storage mass in the vessel adapted to store heat in the course of its transition from a solid to a molten state, and a heat carrier liquid which is not or only slightly miscible with the melt of the storage mass, and where the specific gravity of the storage mass differs so considerably from the specific gravity of the melt that layers are formed. A pump or mixer rotor is so arranged in the heat carrier liquid layer that a vortex is formed, whereby a mixture of the storage mass melt and the heat carrier liquid is sucked up. The liquid storage mass penetrates into the vortex of the pump rotor into minute droplets which assume a spherical shape on account of the surface tension and which then give off their heat to the heat carrier liquid. After solidification, the small spheres are again moved back into the storage mass layer by gravity and by centrifugal forces. The lateral wall of storage vessel has a slightly downwardly narrowing, truncated conical shape. During solidifying the rotor cuts the solidified mass into small pieces so that during subsequent heating no forces due to expansion of the mass act on the lateral wall of the storage vessel.

### Summary

During heating, the salt expands and consequently exerts large forces on the lateral wall of the storage container setting high demands concerning the strength of the lateral wall of the storage container. When the salt is however molten for the first time, there is space between the salt particles allowing the salt to expand without exerting forces on the lateral wall of the storage container, through which in known devices the molten salt is often kept in a liquid state once it has been molten. The same happens when melting and solidifying metals.

This problem is solved by providing a heat exchange system according to claim 1, provided with a storage container wherein the lateral wall has a downwardly narrowing, truncated conical and circumferentially walled shape and having an inclination angle of at least 20 degrees versus a vertical plane. In this way, the expanding liquefying heat storage mass can rise up without getting stuck between the lateral wall and consequently without exerting big forces on the lateral wall of the storage container.

In order to even more reduce the forces on the lateral wall of the storage container, the inclination angle of the lateral wall versus the vertical plane is around 25 degrees.

A conical shape has no corners, as such the heat storage mass cannot get stuck nor leave residues in corners.

From WO2013/138915A1 an energy storage and transfer system is known in which a molten salt is transferred by a railway car having a storage container. The salt is kept continuously in molten state so no problems occur with respect to solidifying and melting the salt. The storage container has a rectangular cross section. The longitudinal walls of the storage container converting downwards with an inclination angle of about 10 degrees versus a vertical plane.

From DE 10 2012 000 143 A1 a heat transfer system is known having a large first storage container and a small second storage container of which only a small part of the lateral wall has a downwardly narrowing shape, with an inclination angle of about 10 degrees versus a vertical plane. The larger part of the lateral wall of the second storage container has a cylindrical shape. After solidifying the mass is only heated in the small second storage container and during heating of the mass the molten outer layer of the mass is directly discharged.

From US 5 571 232 a heat storage container is known of which the lateral wall has a downwardly narrowing, truncated conical shape, with an inclination angle of about 45 degrees versus a vertical plane. This container is for storing water ice. Water ice shrinks when melted, so there occur no problems with respect to solidifying and melting the water/ice.

A further disadvantage of the device as described in DE 27 25 658 A is that there is no possibility to let the liquid heat storage mass leave the storage container in order to transport it to a heat consumption system / device outside the storage container.

This problem is solved by providing a storage container according to the present disclosure, wherein an output opening is provided that, during operation, is constantly in fluid connection with the liquid heat storage mass. Being in fluid connection means that the output opening itself can be in direct contact with the liquid heat transfer mass or via an open end of a tube. This has the advantage that during operation, there is enough liquid heat storage mass to continuously leave the storage container.

In an optional embodiment of a storage container according to the present disclosure, the output opening is located in the bottom wall of the storage container.

In an embodiment of a storage container according to the present disclosure, the storage container comprises a valve which is operable to open and close the output opening.

According to another aspect of the disclosure, a heat storage system is provided comprising a storage container according to the present disclosure as described above, a shredder for shredding large pieces of solid heat storage mass into smaller pieces, as well as transport means for transporting the smaller pieces of solid heat storage mass to a filling opening provided in the storage container.

According to a further aspect of the present disclosure, a heat transfer system is provided comprising a storage container according to the disclosure as described above, heat exchange means and a circuit connecting the storage container to the heat exchange means and provided for circulating the liquid heat storage mass between the heat exchange means and the container. This circuit has an upper and a lower point and the storage container is situated at the lower point of the circuit.

According to an alternative or additional aspect of the heat transfer system disclosed herein, the heat exchanger (or a part thereof) is positioned inside the storage container according to the disclosure as described above. By for instance providing inside the storage container a heat exchanger or a liquid circuit of the heat exchanger, this circuit can be used to cool down the heat storage mass when needed. This provides a solution for situations where flexible timing is necessary, for instance when rapid cooling or heating is required. In a particular embodiment the heat transfer system is provided with a heat exchanger (or a part thereof) positioned inside the storage container as well as heat exchange means and a circuit connecting the storage container to the heat exchange means and provided for circulating the liquid heat storage mass between the heat exchange means and the container.

In a further aspect the present disclosure refers to a method for storing heat by using a storage container as disclosed herein. In particular the method provides in a storage container comprising a heat storage mass that is convertible from a solid to a liquid phase by adding heat and from a liquid to a solid state by releasing heat, wherein the method comprises the steps of:
- converting the heat storage mass from a solid to a liquid phase by adding heat using heating means; and
- converting the heat storage mass from liquid to solid phase by cooling down the liquid heat storage mass;
wherein the heating means are in the form of one or more electrical heating elements located at the inside of the storage container against the lateral wall thereof or inside the lateral wall of the storage container.

The cooling down step in particular occurs in a passive form, by switching of the heating means.

In particular, the method as disclosed herein uses salt or metal as heat storage mass.

In a particular embodiment the method as disclosed here further comprises the steps of shredding large pieces of solid heat storage mass into smaller pieces, transporting the smaller pieces of solid heat storage mass to the storage container, and introducing the smaller pieces of solid heat storage mass into the storage container.

In a further aspect, the present disclosure provides in a the method for transferring heat using the heat storage method as disclosed here, further comprising the steps of circulating the liquid heat storage mass between heat exchange means and the storage container, wherein heat from the liquid heat storage mass is extracted by the heat exchange means. Alternatively or additionally, the present disclosure provides in a the method for transferring heat using the heat storage method as disclosed here, further comprising the steps of exchanging heat between the liquid heat storage mass and the heat exchanger (or a part thereof) in the storage container according to the disclosure as described above. In particular the heat extracted by the heat exchange means is converted into energy.

### Brief description of the drawings

The present disclosure will be further elucidated below on the basis of drawings. These drawings show embodiments of the heat storage system, the storage container and a heat transfer system according to the present disclosure. Although the present disclosure is elucidated above on the basis of the given drawings, it should be noted that this disclosure is not limited whatsoever to the embodiments shown in the drawings. The disclosure also extends to all embodiments deviating from the embodiments shown in the drawings within the context defined by the claims.

In the drawings:
- figure 1, represents an embodiment of a heat storage system according to the present disclosure;
- figure 2, represents a cross-section of a storage container of the heat storage system as shown in figure 1; and
- figure 3, represents a schematic representation of an energy generation system comprising a heat transfer system according to the present disclosure comprising in its turn a storage container as shown in figure 2.

### Detailed description of the drawings

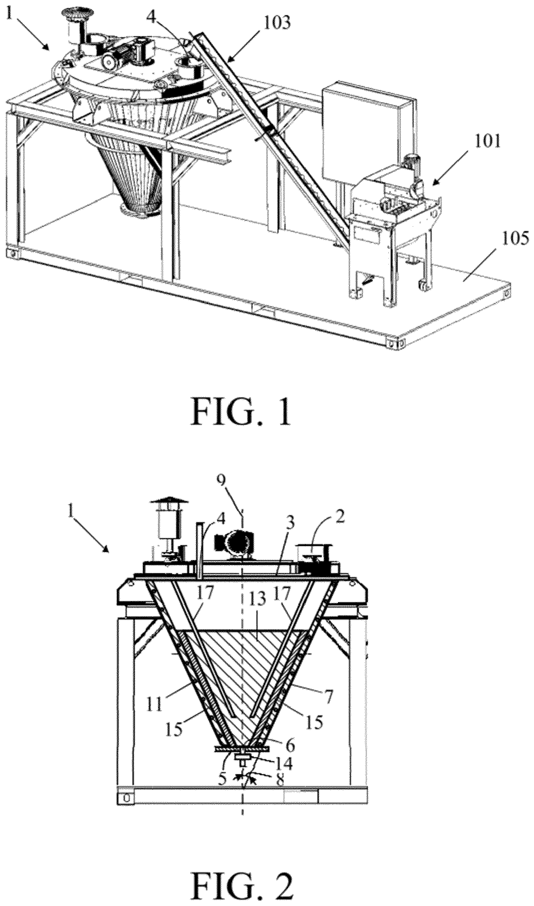

A heat storage system according to the present disclosure, as shown in figure 1, comprises a storage container 1 for a heat storage mass that is convertible from a solid to a liquid phase by adding heat and from a liquid to a solid state by releasing heat. The heat storage mass can be a salt as well as a metal that can be molten and can solidify again. In the embodiment as shown in figure 1, the heat storage mass is a salt that is typically used in heat storage applications. The heat storage system further comprises a shredder 101 for shredding large pieces of solid salt into smaller pieces. Further, the heat storage system comprises transport means 103 for transporting the smaller pieces of solid salt to a filling opening 2 arranged in the storage container. The storage container, the shredder and the transport means can be mounted on a plateau 105 which can be placed on a transport vehicle to be moved to a location where such a heat storage system is needed.

As shown in figure 2, the storage container 1 has an upper wall 3, a bottom wall 5 and a lateral wall 7 that is extending in between the upper and the lower wall. The lateral wall 7 has a downwardly narrowing truncated form and extends circumferentially such that a closed wall is obtained. The lateral wall has an inclination angle 8 of about minimum 10, more in particular 20 and most in particular 25 degrees with respect to a vertical extending plane 9. More in particular, the lateral wall has a truncated conical shape.

The storage container is provided with an output opening 6, more in particular arranged in the bottom wall 5 of the storage container and more in particular being continuously in fluid connection with the molten salt 13. This output opening 6 can be closed off by a valve 14 which is operable to open and to close off the output opening 6.

The storage container furthermore comprises one or more electrical heating elements 11 that are arranged to melt solid salt when they are switched on and to let the liquid salt to cool down again and consequently release its heat in case they are switched off again. These electrical heating elements 11 can be placed either inside the storage container against the lateral wall 7 thereof or are arranged in the lateral wall. The electrical heating means can be arranged under the form of a resistance wire or under the form of resistance rods. In an embodiment, the bottom wall 5 is free from such heating means 11. When a solid salt mass is heated, first, a layer 15 of the solid salt that is in contact with the lateral wall 7 starts melting. Once the salt 13 has been molten, one or more further electrical heating elements 17 arranged inside the storage container and spaced apart from the lateral wall can speed up the melting process. These further electrical heating elements are in particular parallel arranged with the lateral wall 7 and can be attached to the upper wall 3 of the storage container 1.

The storage container 1 can form part of a heat transfer system comprising heat exchange means and a circuit connecting the storage container to the heat exchange means. The molten salt can circulate in this circuit between the heat exchange means and the storage container. Such a circuit has an upper and a lower point and the storage container situated at the lower point of the circuit. Alternatively or additionally the heat transfer system comprises a heat exchanger (or a part thereof) being positioned inside the storage container.

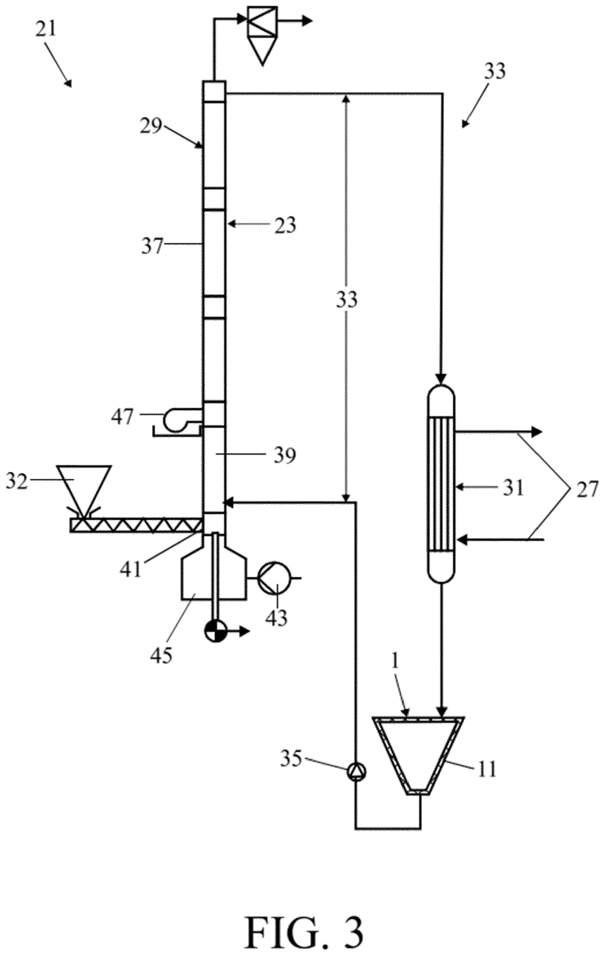

An energy generation system as shown in figure 3 comprises an energy generation system 21 that is provided with a thermal conversion system, in this example a combustion boiler 23 for burning biomass, and a heat transfer system 25 for transferring heat from a thermal conversion system to a steam production device 27. The heat transfer system comprises a heat exchange system 29 inside the combustion boiler, which heats salt to a temperature in excess of 350 °C with heat produced by the thermal conversion system. A heat exchanger 31 utilizes the heat for heating water or overheating steam which is utilized for example for drying wet biomass which in its turn is then fed into the combustion boiler at 32. The heat transfer system further comprises a circuit 33 connecting the storage container 1 to the heat exchange means 29 and 33 and is arranged for circulating molten salt between the heat exchange means and the storage container. The molten salt is pumped by a pump 35 from the storage container 1 to the combustion boiler 23 where it heated. Subsequently, the heated molten salt enters the heat exchanger 31 from which it leaves at a temperature of approximately 250 °C and returns to the storage container. The combustion boiler 23 is provided with a riser and a boiler wall 37 and a combustion space 39 situated inside the boiler wall 37. The bottom of the combustion boiler is formed by a circulating fluidized bed 41. An air blower 43 blows the required amount of air via an air chamber 45 into the fluidized bed 41. For initiating the combustion process, a start burner 47 may be utilized. The riser has several levels which each are cooled to an optimal temperature by the heat transfer medium. The boiler wall 37 is double walled and is cooled by the heat transfer medium. Thus in fact, the boiler wall 37 forms the first heat exchange means 29.

For starting the thermal conversion operation of dried biomass, first solid salt is heated by heating means 11. Once the salt has been heated sufficiently to melt it, it is pumped into the wall 37 of the combustion boiler 23 where it is heated to a higher temperature. From there, the molten salt enters the heat exchanger 31 to produce steam for drying wet biomass to be burned. In this heat exchanger, the temperature of the molten salt is lowered to just above solidifying temperature. The molten salt then flows back into the storage container 1.

## Claims

1. Heat transfer system (25) for transferring heat from a thermal conversion system (21) to a heat consuming system (27), comprising:
- a heat storage salt,
- a heat storage system, comprising a storage container (1) for the heat storage salt,
- a heat exchange system (29) which heats the heat storage salt to a temperature in excess of 350 °C with heat produced by the thermal conversion system, - a circuit (33) connecting the heat storage system to the heat exchange system (29) and being arranged for circulating the molten heat storage salt between the heat exchange system (29) and the heat storage system, the circuit (33) comprising a pump (35) for pumping the molten salt from the storage container (1) to the heat exchange system (29),
- a heat exchanger (31) transferring the heat of the molten salt to the heat consuming system (27),
the heat storage mass being convertible from a solid to a liquid phase by adding heat and from a liquid to a solid state by releasing heat, wherein the storage container comprises
- an upper wall (3), a bottom wall (5) and a lateral wall (7) extending in between the upper and the bottom wall, the lateral wall (7) has a downwardly narrowing, truncated conical and circumferentially walled shape, with an inclination angle (8) of at least 20 degrees versus a vertical plane,
- heating means (11) comprising electrical heating elements that are switchable on and off and that are provided for converting the heat storage mass (13) in the storage container
• from the solid to the liquid phase by adding heat to the heat storage mass when the heating means are switched on, and
• from the liquid to the solid phase by cooling down the liquid heat storage mass when the heating means are switched off.

2. Heat transfer system according to claim 1, wherein the electrical heating elements (11) are solely located at the inside of the storage container (1) against the lateral wall (7) thereof or inside the lateral wall (7) of the storage container (1).

3. Heat transfer system according to claim 1 or 2, wherein the heat storage mass has an upper surface, and wherein the storage container comprises one or more further electric heating elements (17) located inside the container (1) spaced apart from the lateral wall (7) and extending through the upper surface of the heat storage mass, wherein the further heating elements are arranged to start heating the heat storage mass once the upper surface of the heat storage mass has been liquefied.

4. Heat transfer system according to claim 3, wherein the further electric heating elements are fixed to the upper wall (5) of the storage container.

5. Heat transfer system according to any one of claims 1 to 4, wherein the inclination angle (8) versus a vertical plane is around 25 degrees.

6. Heat transfer system according to any one of the preceding claims, wherein an output opening (6) is provided that, during operation, is constantly in fluid connection with the liquid heat storage mass (13).

7. Heat transfer system according to any one of the preceding claims, wherein the output opening (6) is located in the bottom wall (5) of the storage container (1).

8. Heat transfer system according to claim 6 or 7, wherein the storage container comprises a valve (14) which is operable to open and close the output opening (6).

9. Heat transfer system according to any one of the preceding claims, comprising:
- a shredder (101) for shredding large pieces of solid heat storage mass into smaller pieces; and
- transport means (103) for transporting the smaller pieces of solid heat storage mass to a filling opening (2) provided in the storage container.

10. Heat transfer system according to any one of the preceding claims, wherein the circuit has a lower point and an upper point, the storage container being situated at the lower point of the circuit.

## Patentansprüche

1. Wärmeübertragungssystem (25) zum Übertragen von Wärme von einem thermischen Umwandlungssystem (21) auf ein wärmeverbrauchendes System (27), umfassend:
- ein Wärmespeichersalz,
- ein Wärmespeichersystem, umfassend einen Vorratsbehälter (1) für das Wärmespeichersalz,
- ein Wärmeaustauschsystem (29), das das Wärmespeichersalz mit von dem thermischen Umwandlungssystem erzeugter Wärme auf eine Temperatur über 350 °C erhitzt,
- einen Kreislauf (33), der das Wärmespeichersystem mit dem Wärmeaustauschsystem (29) verbindet und zum Zirkulieren des geschmolzenen Wärmespeichersalzes zwischen dem Wärmeaustauschsystem (29) und dem Wärmespeichersystem angeordnet ist, wobei der Kreislauf (33) eine Pumpe (35) zum Pumpen des geschmolzenen Salzes von dem Vorratsbehälter (1) zu dem Wärmeaustauschsystem (29) umfasst,
- einen Wärmetauscher (31), der die Wärme des geschmolzenen Salzes auf das wärmeverbrauchende System (27) überträgt,
wobei die Wärmespeichermasse ist durch Wärmezufuhr von einer festen in eine flüssige Phase und durch Wärmeabfuhr von einem flüssigen in einen festen Zustand überführbar ist, wobei der Speicherbehälter umfasst:
- eine obere Wand (3), eine untere Wand (5) und eine Seitenwand (7), die sich zwischen der oberen und der unteren Wand erstreckt, wobei die Seitenwand (7) eine sich nach unten verjüngende, kegelstumpfförmige und umlaufende Wandform mit einem Neigungswinkel (8) von mindestens 20 Grad gegenüber einer vertikalen Ebene aufweist,
- Heizmittel (11), die ein- und ausschaltbare elektrische Heizelemente umfassen und dazu vorgesehen sind, die Wärmespeichermasse (13) im Speicherbehälter umzuwandeln:
• von der festen in die flüssige Phase durch Wärmezufuhr zur Wärmespeichermasse, wenn die Heizmittel eingeschaltet sind, und
• von der flüssigen in die feste Phase durch Abkühlen der flüssigen Wärmespeichermasse, wenn die Heizmittel ausgeschaltet sind.

2. Wärmeübertragungssystem nach Anspruch 1, wobei die elektrischen Heizelemente (11) ausschließlich an der Innenseite des Speicherbehälters (1) an dessen Seitenwand (7) oder innerhalb der Seitenwand (7) des Speicherbehälters (1) angeordnet sind.

3. Wärmeübertragungssystem nach Anspruch 1 oder 2, wobei die Wärmespeichermasse eine obere Oberfläche aufweist und wobei der Speicherbehälter ein oder mehrere weitere elektrische Heizelemente (17) umfasst, die sich innerhalb des Behälters (1) befinden, von der Seitenwand (7) beabstandet sind und sich durch die obere Oberfläche der Wärmespeichermasse erstrecken, wobei die weiteren Heizelemente so angeordnet sind, dass sie mit dem Erhitzen der Wärmespeichermasse beginnen, sobald die obere Oberfläche der Wärmespeichermasse verflüssigt wurde.

4. Wärmeübertragungssystem nach Anspruch 3, wobei die weiteren elektrischen Heizelemente an der oberen Wand (5) des Speicherbehälters befestigt sind.

5. Wärmeübertragungssystem nach einem der Ansprüche 1 bis 4, wobei der Neigungswinkel (8) gegenüber einer vertikalen Ebene etwa 25 Grad beträgt.

6. Wärmeübertragungssystem nach einem der vorhergehenden Ansprüche, wobei eine Ausgangsöffnung (6) vorgesehen ist, die während des Betriebs ständig in Flüssigkeitsverbindung mit der flüssigen Wärmespeichermasse (13) steht.

7. Wärmeübertragungssystem nach einem der vorhergehenden Ansprüche, wobei sich die Ausgangsöffnung (6) in der Bodenwand (5) des Speicherbehälters (1) befindet.

8. Wärmeübertragungssystem nach Anspruch 6 oder 7, wobei der Speicherbehälter ein Ventil (14) aufweist, das zum Öffnen und Schließen der Ausgangsöffnung (6) betätigbar ist.

9. Wärmeübertragungssystem nach einem der vorhergehenden Ansprüche, umfassend:
- einen Zerkleinerer (101) zum Zerkleinern großer Stücke fester Wärmespeichermasse in kleinere Stücke; und
- Transportmittel (103) zum Transportieren der kleineren Stücke fester Wärmespeichermasse zu einer im Speicherbehälter vorgesehenen Einfüllöffnung (2).

10. Wärmeübertragungssystem nach einem der vorhergehenden Ansprüche, wobei der Kreislauf einen unteren und einen oberen Punkt aufweist, wobei sich der Speicherbehälter am unteren Punkt des Kreislaufs befindet.

## Revendications

1. Système de transfert de chaleur (25) pour transférer de la chaleur d'un système de conversion thermique (21) vers un système consommateur de chaleur (27), comprenant :
- un sel accumulateur de chaleur,
- un système de stockage de chaleur, comprenant un récipient de stockage (1) pour le sel de stockage de chaleur,
- un système d'échange thermique (29) qui chauffe le sel accumulateur de chaleur à une température supérieure à 350 °C avec la chaleur produite par le système de conversion thermique,
- un circuit (33) reliant le système d'accumulation de chaleur au système d'échange thermique (29) et étant agencé pour faire circuler le sel fondu accumulateur de chaleur entre le système d'échange thermique (29) et le système de stockage thermique, le circuit (33) comprenant une pompe (35) pour pomper le sel fondu du conteneur de stockage (1) vers le système d'échange thermique (29),
- un échangeur thermique (31) transférant la chaleur du sel fondu au système consommateur de chaleur (27),
la masse de stockage de chaleur étant convertible d'une phase solide à une phase liquide en ajoutant de la chaleur et d'un état liquide à un état solide en libérant de la chaleur, le récipient de stockage comprenant
- une paroi supérieure (3), une paroi inférieure (5) et une paroi latérale (7) s'étendant entre la paroi supérieure et la paroi inférieure, la paroi latérale (7) ayant une forme tronconique se rétrécissant vers le bas et à paroi circonférentielle, avec un angle d'inclinaison (8) d'au moins 20 degrés par rapport à un plan vertical,
- moyens de chauffage (11) comprenant éléments chauffants électriques qui peuvent être activés et désactivés et qui sont prévus pour convertir la masse d'accumulation de chaleur (13) dans le récipient de stockage
• de la phase solide à la phase liquide en ajoutant de la chaleur à la masse de stockage de chaleur lorsque les moyens de chauffage sont allumés, et
• de la phase liquide à la phase solide en refroidissant la masse liquide d'accumulation de chaleur lorsque les moyens de chauffage sont éteints.

2. Système de transfert de chaleur selon la revendication 1, dans lequel les éléments chauffants électriques (11) sont situés uniquement à l'intérieur du conteneur de stockage (1) contre la paroi latérale (7) de celui-ci ou à l'intérieur de la paroi latérale (7) du stockage.

3. Système de transfert de chaleur selon la revendication 1 ou 2, dans lequel la masse de stockage de chaleur présente une surface supérieure, et dans lequel le conteneur de stockage comprend un ou plusieurs autres éléments chauffants électriques (17) situés à l'intérieur du conteneur (1) espacés des côtés latéraux, paroi (7) et s'étendant à travers la surface supérieure de la masse de stockage de chaleur, les autres éléments chauffants étant agencés pour commencer à chauffer la masse de stockage de chaleur une fois que la surface supérieure de la masse de stockage de chaleur a été liquéfiée.

4. Système de transfert de chaleur selon la revendication 3, dans lequel les éléments chauffants électriques supplémentaires sont fixés à la paroi supérieure (5) du conteneur de stockage.

5. Système de transfert de chaleur selon l'une quelconque des revendications 1 à 4, dans lequel l'angle d'inclinaison (8) par rapport à un plan vertical est d'environ 25 degrés.

6. Système de transfert de chaleur selon l'une quelconque des revendications précédentes, dans lequel est prévue une ouverture de sortie (6) qui, pendant le fonctionnement, est constamment en connexion fluidique avec la masse liquide de stockage de chaleur (13).

7. Système de transfert de chaleur selon l'une quelconque des revendications précédentes, dans lequel l'ouverture de sortie (6) est située dans la paroi inférieure (5) du conteneur de stockage (1).

8. Système de transfert de chaleur selon la revendication 6 ou 7, dans lequel le conteneur de stockage comprend une vanne (14) qui peut être actionnée pour ouvrir et fermer l'ouverture de sortie (6).

9. Système de transfert de chaleur selon l'une quelconque des revendications précédentes, comprenant :
- un broyeur (101) pour déchiqueter de gros morceaux de masse solide de stockage de chaleur en morceaux plus petits ; et
- des moyens de transport (103) pour transporter les plus petits morceaux de masse solide de stockage de chaleur vers une ouverture de remplissage (2) prévue dans le conteneur de stockage.

10. Système de transfert de chaleur selon l'une quelconque des revendications précédentes, dans lequel le circuit présente un point inférieur et un point supérieur, le conteneur de stockage étant situé au point inférieur du circuit.
